# EUROPÄISCHE PATENTANMELDUNG

(11) **EP 4 644 854 A1**
(43) Veröffentlichungstag der Anmeldung: **05.11.2025**
(21) Anmeldenummer: 24174129.7
(22) Anmeldetag: 03.05.2024
(51) Int. Cl.: G01K 1/18, G01K 1/143

(54) **SENSORBAUGRUPPE**

(71) Anmelder: Yageo Nexensos GmbH, 63801 Kleinostheim (DE)
(72) Erfinder: Loose, Thomas, 63801 Kleinostheim (DE); Falter, Martina, 63801 Kleinostheim (DE); Muziol, Matthias, 63801 Kleinostheim (DE)
(74) Vertreter: Meissner Bolte Partnerschaft mbB

(57) **Zusammenfassung**

Die Erfindung betrifft eine Sensorbaugruppe 50 mit einem Sensor-Element 20 das zumindest abschnittsweise, vorzugsweise vollständig, in einer Polymerhülle 30 angeordnet ist, wobei die Polymerhülle eine Einkoppelfläche 31 zum Inkontaktbringen mit einem zu messenden Objekt 100 und eine zur Einkoppelfläche 31 gegenüberliegende Außenfläche 32 aufweist,
wobei das Sensor-Element 20 eine zur Einkoppelfläche 31 weisende Unterseite 22 und eine zur Außenfläche 32 weisende Oberseite 23 aufweist,
wobei zwischen der Oberseite 23 des Sensor-Elements 20 und der Außenfläche 32 ein erster Wärmeleitbereich 61 und zwischen der Unterseite 22 des Sensor-Elements 20 und der Einkoppelfläche 31 mindestens ein zweiter Wärmeleitbereich 62 ausgebildet ist, wobei der Wärmewiderstand des ersten Wärmeleitbereichs 61 mindestens 10 % größer ist als der Wärmewiderstand des zweiten Wärmeleitbereichs 62.

## Beschreibung

Die Erfindung betrifft eine Sensorbaugruppe mit einem Sensor-Element, das zumindest abschnittsweise in einer Polymerhülle angeordnet ist, gemäß Merkmalskombination des Anspruches 1. Des Weiteren betrifft die Erfindung eine Anordnung, die eine erfindungsgemäße Sensorbaugruppe sowie ein zu messendes Objekt umfasst, gemäß Merkmalskombination des Anspruches 13.

Aus dem Stand der Technik sind zahlreiche Temperatursensoren bekannt, die einen unterschiedlichen Aufbau aufweisen können sowie für unterschiedliche Messanwendungen oder in unterschiedlichen Messumgebungen eingesetzt werden. Es ist stets der Wunsch, die Dynamik der Temperaturerfassung zu verbessern. Die Dynamik der Temperaturerfassung, d. h. insbesondere die Ansprechzeiten von Temperatursensoren werden in der Regel durch Weiterentwicklung der Sensor-Elemente verbessert.

Ausgehend von diesem Stand der Technik ist es Aufgabe der vorliegenden Erfindung, eine weiterentwickelte Sensorbaugruppe anzugeben, die hinsichtlich der Dynamik der Temperaturerfassung verbessert ist, wobei auf bereits existierende Sensor-Elemente und/oder Sensor-Träger-Elemente zurückgegriffen werden soll.

Die Aufgabe wird hinsichtlich einer weiterentwickelten Sensorbaugruppe durch den Gegenstand des Anspruches 1 gelöst. Im Hinblick auf eine Anordnung, umfassend einen weiterentwickelte Sensorbaugruppe und ein zu messendes Objekt, wird diese Aufgabe durch den Gegenstand des Patentanspruches 13 gelöst.

Konkret wird die Aufgabe erfindungsgemäß mit einer Sensorbaugruppe mit einem Sensor-Element gelöst, das zumindest abschnittsweise, vorzugsweise vollständig, in einer Polymerhülle angeordnet ist. Die Polymerhülle weist mindestens eine Einkoppelfläche zum Inkontaktbringen mit einem zu messenden Objekt und eine zur Einkoppelfläche gegenüberliegende Außenfläche auf. Das Sensor-Element weist eine zur Einkoppelfläche weisende Unterseite und eine zur Außenfläche weisende Oberseite auf, wobei zwischen der Oberseite des Sensor-Elements und der Außenfläche ein erster Wärmeleitbereich und zwischen der Unterseite des Sensor-Elements und der Einkoppelfläche mindestens ein zweiter Wärmeleitbereich ausgebildet ist, wobei der Wärmewiderstand des ersten Wärmeleitbereichs mindestens 10 % größer ist als der Wärmewiderstand des zweiten Wärmeleitbereichs.

Durch Anpassung der Wärmewiderstände in den unterschiedlichen Wärmeleitbereichen der Sensorbaugruppe wird es ermöglicht, die Dynamik der Temperaturerfassung zu verbessern. Mit anderen Worten werden die Ansprechzeiten der Sensorbaugruppe verkürzt. Es wird eine verbesserte Wärmeankopplung an das zu messende Objekt zur Verfügung gestellt. Gleichzeitig kann auf bereits bekannte bzw. existierende Sensor-Elemente und/oder Sensor-Träger-Einheiten zurückgegriffen werden.

Besonders bevorzugt wird aufgrund der Ausbildung unterschiedlicher Wärmewiderstände in den unterschiedlichen Wärmeleitbereichen der Sensorbaugruppe eine Art asymmetrischer Sensorbaugruppenaufbau zur Verfügung gestellt. Insbesondere wird hinsichtlich der Wärmewiderstände zwischen den Bereichen unterschieden, die zu einem zu messenden Objekt hinweisend und von diesem Objekt wegweisend ausgebildet sind. Grundsätzlich kann die Asymmetrie der Wärmewiderstände realisiert werden durch unterschiedlichen Materialstärken, durch den Verbau von Materialien mit unterschiedlichen spezifischen Wärmewiderständen, oder durch die Kombination von beiden. In einer bevorzugten Ausführungsform trägt der Verbau von Materialien mit unterschiedlichen spezifischen Wärmewiderständen zur Asymmetrie in den Wärmewiderständen bei. In einer besonders bevorzugten Ausführungsform ist der Effekt der Materialwahl größer als der Effekt der Materialstärken.

Aufgrund der erfindungsgemäßen Weiterentwicklung der Sensorbaugruppe wird eine gute Wärmeübertragung vom zu messenden Objekt in Richtung des Sensor-Elements zur Verfügung gestellt, wobei gleichzeitig unterdrückt wird, dass die Wärme ausgehend von dem Sensor-Element über die weiteren Abschnitte, die nicht im Zusammenhang mit dem Wärmeübertrag vom zu messenden Objekt zum Sensor-Element stehen, weitergeleitet wird.

Bei dem Sensor-Element kann es sich beispielsweise um ein NTC-Element oder PTC-Element handeln. Bei dem Sensor-Element handelt es sich vorzugsweise um ein PTC-Element, das auf Dünnschichtbasis hergestellt ist. Das PTC-Element besteht vorzugsweise aus einem thermosensitiven Material, das beispielsweise ein Metall-Messmäander ist.

Das Sensor-Element ist beispielsweise integriert in eine Glashülle als NTC-Element ausgebildet. Des Weiteren ist es möglich, dass es sich bei dem Sensor-Element um einen Metall-Mäander eines Chip-Elements handelt.

Als Sensor-Element wird lediglich der sensitive Sensor-Abschnitt verstanden, d. h. lediglich der Abschnitt, dessen physikalischen Eigenschaften die Temperaturmessung erlauben. Zum Sensor-Element nicht zugehörig gezählt ist vorzugsweise - falls vorhanden - dessen Primärisolation. Zur Primärisolation werden vorzugsweise Substrate und/oder Träger und/oder anorganisches elektrisches Isolationsmaterial gezählt. Zum Sensor-Element ebenfalls nicht zugehörig sind vorzugsweise dessen elektrische Zuleitungen. Das Sensor-Element selbst ist komplett elektrisch leitfähig oder zumindest halbleitend.

Die Sensorbaugruppe wird im Verwendungszustand mit einem zu messenden Objekt in Kontakt gebracht. Hierzu weist bevorzugt die Polymerhülle mindestens eine Einkoppelfläche auf, bzw. ein Abschnitt der Polymerhülle dient als mindestens eine Einkoppelfläche. Bei dieser Einkoppelfläche handelt es sich vorzugsweise um die Auflagefläche, die im Verwendungszustand der Sensorbaugruppe mit dem zu messenden Objekt in Kontakt gebracht wird. Zu dieser Einkoppelfläche gegenüberliegend ist eine Außenfläche der Polymerhülle ausgebildet.

Als eine gegenüberliegende Außenfläche ist insbesondere eine derartige Fläche zu verstehen, die bei einem Schnitt durch die Sensorbaugruppe, wobei der Schnitt senkrecht zur Einkoppelfläche durchgeführt wird, auf der zur Einkoppelfläche gegenüberliegenden Seite ausgebildet ist. Zwischen der ersten Einkoppelfläche und der gegenüberliegenden Außenfläche ist das Sensor-Element befindlich. Die zur mindestens einen bzw. ersten Einkoppelfläche gegenüberliegende mindestens eine Fläche bzw. Außenfläche muss nicht zwangsläufig parallel zur Einkoppelfläche ausgebildet sein.

Als eine gegenüberliegende Außenfläche der Polymerhülle kann ein zur Einkoppelfläche deckungsgleicher Abschnitt der Polymerhülle verstanden werden, der auf der Polymerhülle in Relation zum Sensor-Element auf dessen gegenüberliegender Seite ausgebildet ist.

Vorzugsweise ist die mindestens eine Einkoppelfläche ein Teil der Polymerhülle. Sie umfasst dann die gesamte Fläche der Polymerhülle, die im Benutzungszustand mit dem zu messenden Objekt in Kontakt steht. Dabei ist klar, dass es sich bei der Einkoppelfläche nicht zwangsläufig um eine scharf abgetrennte Fläche handeln muss, sondern vielmehr um die Fläche der Polymerhülle, die im Verwendungsfall mit dem zu messenden Objekt in Kontakt steht und zeit- und/oder abschnittsweise hinsichtlich der tatsächlichen Größe der Fläche variieren kann. Insbesondere ist es möglich, dass seitliche Kanten der Einkoppelfläche im Laufe der Zeit abstehen und nicht mehr in Kontakt mit dem zu messenden Objekt stehen, sodass sich die mindestens eine Einkoppelfläche in diesem Fall im Laufe der Zeit verkleinern würde.

Das Sensor-Element weist zwei Seiten auf, die als Hauptseiten zu bezeichnen sind. Beispielsweise bei Ausbildung eines PTC-Dünnschichtelements handelt es sich bei diesen Hauptseiten um die Seiten des Sensor-Elements mit größter Fläche. Das Sensor-Element weist eine Unterseite sowie eine Oberseite auf. Die Unterseite ist derart definiert, dass diese zur Einkoppelfläche weist. Die Oberfläche weist hingegen zur Außenfläche der Polymerhülle.

Im Falle eines es NTC-Elementes sind die beiden Seiten u. U. nicht klar voneinander abgetrennt. In diesem Falle gilt die der Einkoppelfläche zugewandte Seite des NTC-Elements als Unterseite des Sensor-Elements.

Die Außenfläche der Polymerhülle ist nicht zwangsläufig luftumspült oder freistehend. Die Außenfläche der Polymerhülle kann durch weitere Objekte berührt und/oder mechanisch gehalten werden, deren Temperatur im dynamischen Zustand nicht notwendig identisch mit der Temperatur des Messobjektes sein müssen.

Die Sensorbaugruppe umfasst mindestens zwei Wärmeleitbereiche. Ein erster Wärmeleitbereich ist zwischen der Oberseite des Sensor-Elements und der Außenfläche ausgebildet. Ein zweiter Wärmeleitbereich ist hingegen zwischen der Unterseite des Sensor-Elements und der Einkoppelfläche der Polymerhülle ausgebildet.

Die Oberseite und die Unterseite des Sensor-Elements müssen nicht zwangsläufig im geometrisch richtigen Sinne "oben" und "unten" ausgebildet sein. Vielmehr wird die Ausrichtung der Unterseite sowie der Oberseite in Relation zur Einkoppelfläche bzw. zur gegenüberliegenden Außenfläche der Polymerhülle definiert.

Mindestens ein Abschnitt der Außenflächen der Polymerhülle kann zusätzlich zur Fixierung durch eine Klemmung oder Klebung dienen und so auch zusätzlich zur Wärmeleitung beitragen.

Die Sensorbaugruppe kann hinsichtlich der Ausbildung des Sensor-Elements weitere Schichten aufweisen. Beispielsweise ist es möglich, dass zur Verbindung mit einem Träger/Substrat zusätzliche Haftschichten ausgebildet sind. Auch das Ausbilden einer dielektrischen Schicht ist möglich. Das Sensor-Element kann außerdem auf der Oberseite und/oder der Unterseite mindestens mit einer Abdeckschicht bedeckt sein. Eine derartige Abdeckschicht ist beispielsweise aus Glas, insbesondere aus Metalloxiden, gebildet oder kann eine Polymerschicht umfassen. Auch das Ausbilden eines Fixierelements, insbesondere zur Verbindung des Sensor-Elements mit einer Zuleitung ist möglich. Das Fixierelement kann eine vorhandene Abdeckschicht mindestens teilweise bedecken. Ein derartiges Fixierelement ist beispielsweise aus Glas und/oder Glaskeramik gebildet. Eine alternative Ausführung des Fixierelementes umfasst Polymerbestandteile. In einer anderen Ausführung wird auf ein separates Fixierelement verzichtet und die Polymerhülle selbst übernimmt die Funktion der elektrischen Isolation der Verbindungsstelle zwischen Zuleitung und Sensor-Element.

Der Wärmewiderstand des ersten Wärmeleitbereichs ist mindestens 10 % größer als der Wärmewiderstand des zweiten Wärmeleitbereichs.

Es ist möglich, dass sowohl im ersten Wärmleitbereich als auch im zweiten Wärmeleitbereich weitere Bauteile, wie beispielsweise mindestens ein Wärmeleitelement und/oder ein Träger und/oder ein Substrat, ausgebildet sind.

In einer bevorzugten Ausführungsform der Erfindung weist die Sensorbaugruppe mindestens ein Wärmeleitelement auf, das mindestens abschnittsweise in dem zweiten Wärmeleitbereich ausgebildet ist. Mit anderen Worten ist mindestens ein Wärmeleitelement in einem Bereich zwischen der Unterseite des Sensor-Elements und der Einkoppelfläche der Polymerhülle ausgebildet. Die Ausdehnung des Wärmeleitelementes kann über den zweiten Wärmeleitbereich hinaus ragen.

Es ist vorzugsweise möglich, dass der überwiegende Teil, vorzugsweise ein wesentlicher Teil, eines effektiven Wärmestroms vom zu messenden Objekt in Richtung des Sensor-Elements im Wärmeleitelement im Wesentlichen parallel und/oder senkrecht zur Einkoppelfläche verläuft.

Als der effektive Wärmestrom ist ein derartiger Wärmestrom bzw. Wärmefluss zu verstehen, der vom zu messenden Objekt in Richtung des Sensor-Elements fließt, so dass am Sensor-Element die Temperatur des zu messenden Objekts detektiert werden kann. Als ein überwiegender Teil ist vorzugsweise ein Anteil von mindestens 50 % des effektiven Wärmestroms zu verstehen. Als ein wesentlicher Teil des effektiven Wärmestroms ist ein Anteil von mindestens 75 % des effektiven Wärmestroms zu verstehen.

Durch Ausbildung der Sensorbaugruppe derart, dass der überwiegende Teil, vorzugsweise ein wesentlicher Teil, des effektiven Wärmestroms im Wesentlichen parallel und/oder senkrecht zur Einkoppelfläche verläuft, wird es ermöglicht, dass zum einen die Temperatur sehr schnell vom Sensor-Element erfasst werden kann. Im Gegenzug wird der Wärmestrom von und zu der objektabgewandten Seite unterdrückt. Somit wird erreicht, dass die vom Sensor-Element detektierte Temperatur tatsächlich bevorzugt vom zu messenden Objekt stammt und der dort vorherrschenden Temperatur nahe kommt und der Störeinfluss einer ggf. mitdetektierten Umgebungstemperatur möglichst kleingehalten wird.

Die Vorteile der erfindungsgemäßen Sensorbaugruppe zeigen sich im inhomogenen Temperaturfeld, und zwar insbesondere für den Fall, dass ein Temperaturgradient zwischen Einkoppelfläche und Außenfläche herrscht. Dieser Fall kann speziell bei dynamischen Messungen im zeitlich veränderlichen Temperaturfeld auftreten. Das tritt insbesondere auf, wenn sich die Temperatur des Messobjektes schnell ändert und detektiert werden soll, bevor die direkte Umgebung des der Sensorbaugruppe mit der Temperatur des Messobjektes im Gleichgewicht ist.

Mithilfe der erfindungsgemäßen Sensorbaugruppe, insbesondere durch Ausbilden oder platzieren eines Wärmeleitelements, wird der Temperaturgradient im zweiten Wärmeleitbereich minimiert. Dieser Bereich kann vorzugsweise als Bereich definiert werden, der senkrecht zum zu messenden Objekt und senkrecht zur Einkoppelfläche auf der Strecke zwischen Einkoppelfläche und Sensor-Element ausgebildet ist. Der Temperaturgradient im ersten Wärmeleitbereich, d. h. vorzugsweise in einem Bereich zwischen dem Sensor-Element und der Außenfläche der Polymerhülle, ist größer als der Temperaturgradient im zweiten Wärmeleitbereich. Auch diesbezüglich wird die Messung des Temperaturgradienten bzw. Wärmewiderstands senkrecht zur Einkoppelfläche der Polymerhülle festgestellt und definiert.

Es ist möglich, dass das Wärmeleitelement zumindest abschnittsweise als Formkörper und/oder Blech ausgebildet ist. Der Formkörper und/oder das Blech kann Metall und/oder Keramik aufweisen. Besonders bevorzugt kann der Formkörper und/oder das Blech Al2O3, AIN und/oder SiC und/oder Si und/oder Cu, aufweisen. Jedes bevorzugt einsetzbare Wärmeleitelement hat eine höhere Wärmeleitfähigkeit als die Polymerhülle, von der es mindestens teilweise umgeben ist. Bevorzugt hat das Wärmeleitelement eine mindestens 5 Mal größere Wärmeleitfähigkeit, besonders bevorzugt eine mindestens 10 mal größere Wärmeleitfähigkeit wie die umgebende Polymerhülle.

Es ist möglich, dass die Sensorbaugruppe mehrere Wärmeleitelemente aufweist. vorzugsweise erfolgt eine Anpassung der Form der Wärmeleitelements und der zu wählenden Anzahl in Abhängigkeit des messenden Objekts. Hierzu werden bei der Ausbildung/Auswahl des Wärmeleitelements/der Wärmeleitelemente beispielsweise die Wärmeleitfähigkeit und/oder die Geometrie des zu messenden Objekts betrachtet.

Des Weiteren ist es möglich, dass in einer Sensorbaugruppe mehrere Wärmeleitelemente unterschiedlicher Ausführungsformen, d. h. beispielsweise ein erstes Wärmeleitelement in Form eines Formkörpers und ein zweites Wärmeleitelement in Form eines Bleches, ausgebildet ist.

Bei Ausbildung mindestens eines Wärmeleitelements betreffend die erfindungsgemäße Sensorbaugruppe können die Abmaße des Wärmeleitelements unterschiedlich ausgebildet sein. In einer möglichen Ausführungsform der Erfindung ist es möglich, dass das Wärmeleitelement eine größere Grundfläche aufweist, wie das Sensor-Element. Insbesondere für PTC-Dünnschichtelemente können Wärmeleitelement und Sensor-Element direkt verbunden sein.

Es ist möglich, dass mindestens ein Wärmeleitelement zwischen der mindestens einen Einkoppelfläche und dem Sensor-Element ausgebildet ist. Insbesondere für dynamische Messanwendungen ergibt sich durch die erhöhte Wärmeleitung zwischen Einkoppelfläche und Sensor-Element ein zeitlicher Messvorteil.

Grundsätzlich sind sowohl im Wesentlichen asymmetrische als auch bezüglich maximal einer Ebene und/oder bezüglich mindestens zwei unterschiedlichen Ebenen symmetrische Sensor-Träger-Einheiten für die Herstellung von erfindungsgemäßen Sensorbaugruppen geeignet.

Wenn in einer besonderen Ausführung bei der Verwendung von Sensor-Träger Einheiten zur Herstellung der Sensorbaugruppe und dem Anordnen an einem Messobjekt bezüglich der Einkoppelfläche die mindestens eine Symmetrieebene der in der Baugruppe befindlichen Sensor-Träger-Einheit parallel zur Einkoppelfläche liegt, kann die Funktion der verbesserten Leitung des Wärmestroms durch mindestens ein zusätzliches Wärmeleitelement besonders gut erfüllt werden, das in dem zweiten Wärmeleitbereich angeordnet ist.

Bei Sensor-Träger-Einheiten umfassend eine ausreichend asymmetrische Primärisolation des Sensor-Elementes oder asymmetrischer Anordnung der Zuleitungen kann jedoch durch gezielte Orientierung der intrinsisch vorhandenen Wärmebrücken die erfindungsgemäße Funktion des zweiten Wärmeleitbereichs bereits durch die Primärisolation gewährleistet sein. Dann muss der vektoriell addierte Wärmestrom im zweiten Wärmeleitbereich, bevorzugt auch im Wesentlichen senkrecht zur Einkoppelfläche zu liegen kommen, um die Funktion des zweiten Wärmeleitbereichs zu gewährleisten. Dieser Fall kann beispielsweise durch die Verwendung von Chip-Sensor-Elementen verwirklicht werden. Je nach Auslegung der Primärisolation, insbesondere der Dicke und Materialauswahl von Isolationsschichten, Fixiertropfen und Trägersubstraten kann die optimierte Einbauposition und -orientierung des Chip-Elementes innerhalb der Polymerhülle variieren.

Als Wärmebrücke der Sensor-Träger-Einheit wird die Richtung definiert, in die bei der freien, unverbauten Sensor-Trägereinheit im homogenen Temperaturfeld der Wärmestrom zeigt. Insbesondere, wenn das Sensor-Element kälter als die Umgebung der Sensor-Träger-Einheit ist, dann ist der effektive vektoriell addierte Wärmestrom in der Richtung der Wärmebrücke; und seine Orientierung zeigt in dem Fall weg vom Sensor-Element.

In einer bevorzugten Ausführung wird das Sensor-Trägerelement so in die Polymerhülle eingebaut, dass die Wärmebrücke im Wesentlichen senkrecht zur Einkoppelfläche zeigt oder einen Winkel kleiner 45° einschließt.

In einer besonderen Ausführung der erfindungsgemäßen Baugruppe kann die Funktion der in der Sensor-Träger-Einheit vorhandenen Wärmebrücke durch mindestens ein weiteres in der Polymerhülle verbautes Wärmeleitelement unterstützt werden. Mindestens ein zusätzliches Wärmeleitelement befindet sich dann zumindest teilweise und bevorzugt überwiegend im zweiten Wärmeleitbereich.

In einer alternativen Ausführungsform kann sogar bei Einbau eines stärkeren Wärmeleitelements zumindest teilweise und bevorzugt überwiegend in den zweiten Wärmeleitbereich die Wirkrichtung der Wärmebrücke der Sensor-Träger-Einheit so überlagern, dass die Wärmebrücke der Primärisolation im Wesentlichen nicht parallel zur Einkoppelfläche oder sogar in den ersten Wärmeleitbereich zeigen muss, aber trotzdem die erfindungsgemäße Funktion der Baugruppe gewährleistet wird.

Erfindungsgemäß ist auch ein zusätzlicher oder alternativer Verbau von Wärmeleitelementen, die nur mittelbar über die Polymermatrix mit dem Sensor-Element und/oder dem Sensor-Trägerelement verbunden sind.

In Abhängigkeit des Anwendungsbereiches bzw. in Abhängigkeit des tatsächlich zu messenden Objektes ist es möglich, dass die Grundfläche des

Wärmeleitelements größer ist als die Grundfläche des Sensor-Elements. Mit anderen Worten ist die Grundfläche des Wärmeleitelements in einem derartigen Fall größer als die Unterseite und/oder Oberseite des Sensor-Elements. Durch Ausbildung eines im Vergleich zum Sensor-Element vergrößerten Wärmeleitelement wird eine bessere Leitung des Wärmeflusses/Wärmestroms vom zu messenden Objekt in Richtung des Sensor-Elements bewirkt. Die Vergrößerung der Grundfläche des mindestens einen Wärmeleitelements im Vergleich zum Sensor-Element kann dabei die vollständige laterale Ausdehnung des Sensor-Elements betreffen. Eine Vergrößerung der Grundfläche des mindestens einen Wärmeleitelements im Vergleich zur Grundfläche (Oberseite/Unterseite) des Sensor-Elements ist besonders bei Anwendungen geeignet, die zu messenden Objekte mit schlechter Wärmeleitfähigkeit betreffen.

Bei der erfindungsgemäßen Sensorbaugruppe, insbesondere bei Ausbildung einer NTC-Pille als Sensor-Element, ist es möglich, dass das mindestens eine Wärmeleitelement das Sensor-Element auch seitlich umgreift bzw. umfasst. Somit ist in einem derartigen Fall nicht nur die Unterseite des Sensor-Elements mit dem Wärmeleitelement verbunden oder in geringem Abstand verbaut, sondern mindestens auch seitliche Abschnitte des Sensor-Elements. Ein geringer Abstand bedeutet hier, kleiner als die halbe Dicke der Sensorbaugruppe.

In einer weiteren Ausführungsform der Erfindung ist es möglich, dass das mindestens eine Wärmeleitelement nicht vollständig innerhalb der Polymerhülle befindlich ist. Mit anderen Worten ist in diesem Fall das mindestens eine Wärmeleitelement lediglich abschnittsweise innerhalb der Polymerhülle befindlich. Besonders geeignet ist eine derartige Ausführungsform, sofern das Wärmeleitelement aus Blech, insbesondere aus einem Metall, gefertigt ist.

Diese Ausführungsform des Wärmeleitelements ermöglicht es, dass die Wärme des zu messenden Objektes in die Polymerhülle hineingeleitet wird. In diesem Fall ist die mindestens eine Einkoppelfläche der Polymerhülle zwar anspruchsgemäß ausgebildet, wobei die Gesamt-Einkoppelfläche der Sensorbaugruppe um den Abschnitt des Wärmeleitelements erhöht wird, der sich außerhalb der Polymerhülle befindet und in Kontakt mit dem zu messenden Objekt steht.

Bei einer derartigen Ausführungsform der Erfindung ist die Sensorbaugruppe im Übrigen derart ausgebildet, dass ein überwiegender Teil des effektiven

Wärmestroms vom zu messenden Objekt in Richtung des Sensor-Elements im Wärmeleitelement im Wesentlichen parallel zur Einkoppelfläche erfolgt. Somit wird eine Leitung des effektiven Wärmestroms vom zu messenden Objekt in Richtung des Sensor-Elements bewirkt.

In dieser Ausführung ist eine zweite Einkoppelfläche als der Bereich zwischen der Außenfläche der Sensorbaugruppe und dem Sensorelement, in dem sich ein Abschnitt des nach außen ragenden Wärmeleitelementes fortsetzt, definiert. Die erste Einkoppelfläche ist der gegenüberliegende Bereich.

Es hat sich gezeigt, dass mithilfe der erfindungsgemäßen Sensorbaugruppe ein ansonsten vorliegender systematischer Fehler bei der Messung in inhomogenen Temperaturfeldern minimiert wird. Dies betrifft insbesondere Fälle, in denen es sich bei dem zu messenden Objekt um stromführende Leiter handelt. Bei dem zu messenden Objekt kann es sich neben einer Motorenwicklung auch um einen Hair-Pin oder einen Flachdraht handeln. Ganz besonders betrifft es die Fälle, wenn schnelle Temperaturwechsel gemessen werden, z.B. ein zeitlicher Temperaturgradient an der Oberfläche des zu messenden Objekt größer 5 K/s.

Sofern hinsichtlich der Anwendung der erfindungsgemäßen Sensorbaugruppe eine spezielle Überschlagsfestigkeit gegeben sein muss, wobei dies insbesondere bei der Temperaturmessung von stromführenden Leitern bzw. Bauteilen notwendig ist, ist das Wärmeleitelement vorzugsweise aus Keramik, besonders bevorzugt aus Al₂O₃ oder AIN oder Si gebildet. Die Verwendung von Metallmaterialien als Wärmeleitelement ist in diesem Fall nachteilig.

In einer weiteren Ausführungsform der Erfindung kann das Wärmeleitelement zumindest abschnittsweise pulverförmig ausgebildet sein und vorzugsweise ein keramikhaltiges Komposit aufweisen.

Vorzugsweise ist das Wärmeleitelement als ein Formkörper ausgebildet, der eine porenarme Keramik aufweist, insbesondere aus einer porenarmen Keramik besteht. Das aus Gaseinschlüssen bestehende Porenvolumen beträgt hierbei weniger als 10 %, bevorzugt weniger als 5 %, besonders bevorzugt weniger als 1 %.

Bei dem keramikhaltigen Komposit kann es sich beispielsweise um Bornitrid, Aluminiumnitrid, Al₂O₃ oder SiC handeln.

In einer weiteren Ausführungsform der Erfindung ist es möglich, dass das Sensor-Element mit der Unterseite oder der Oberseite mittel- oder unmittelbar mit einer ersten Grundfläche eines Trägers verbunden ist, wobei der Träger die erste Grundfläche und eine zweite Grundfläche aufweist. Vorzugsweise ist das Sensor-Element mit der Unterseite mittel- oder unmittelbar mit der ersten Grundfläche des Trägers verbunden.

Es besteht zusätzlich die Möglichkeit, dass das Sensor-Element mit der Oberseite mittel- oder unmittelbar mit der ersten Grundfläche des Trägers verbunden ist, sofern die Sensorbaugruppe vorzugsweise ein (weiteres) Wärmeleitelement aufweist. In diesem Fall können die Wärmeleitbereiche, d. h. der erste und der mindestens zweite Wärmeleitbereich, wie erfindungsgemäß definiert, d. h. in Relation zur Oberseite bzw. Unterseite des Sensor-Elements ausgebildet sein.

In einer weiteren Ausführungsform der Erfindung ist es möglich, dass mindestens ein Wärmeleitelement vollständig oder zumindest abschnittsweise vom Träger gebildet ist. Es ist möglich, dass der Träger des Sensor-Elements als Substrat bezeichnet wird.

Der Träger kann Al₂O₃ oder AIN und/oder Si aufweisen. Besonders bevorzugt besteht der Träger aus Al₂O₃ und/oder AIN und/oder Si.

Es ist möglich, dass die Polymerhülle im Längsschnitt eine Keilform oder eine Stufenform aufweist. Mithilfe einer im Längsschnitt ersichtlichen Keilform der Polymerhülle wird der Querschnitt der Sensorbaugruppe minimiert. Insbesondere bei Verwendung eines PTC-Dünnschicht-Elements als Sensorelement ist es bevorzugt, dass ein Träger- und/oder Wärmeleitelement nahe der Polymerhülle und im Wesentlichen parallel zur Keilfläche ausgebildet ist.

Mithilfe einer ausgebildeten Keilform kann die Kontur der Polymerhülle verbessert an den Aufbau der Sensorbaugruppe angepasst werden, der sich innerhalb der Polymerhülle befindet. Dies betrifft beispielsweise Befestigungsabschnitte, insbesondere Fixiertropfen, zur Anbindung von Zuleitungen an ein Sensor-Element. Die Keilform kann beispielsweise die Form dieser Befestigungsabschnitte, insbesondere Fixiertropfen, aufnehmen, so dass bestmöglich Tot- bzw. Leerraum innerhalb der Polymerhülle verhindert werden.

Dies betrifft auch die Ausbildung einer Stufenform. Mithilfe einer derartigen Stufenform ist es möglich, die Geometrie der Polymerhülle an die konkrete Geometrie der im Inneren der Polymerhülle befindlichen Teile, Abschnitte bzw. Bauteile der Sensorbaugruppe anzupassen. Bei den sich innerhalb der Polymerhülle befindlichen Abschnitten, Bauteilen bzw. Teilen handelt es sich beispielsweise um mindestens ein Sensor-Element, optional mindestens ein Wärmeleitelement und weiterhin optional um einen Träger bzw. ein Substrat eines Sensor-Elements.

In einer weiteren Ausführungsform der Erfindung kann die Polymerhülle mindestens abschnittsweise im Bereich des zweiten Wärmeleitbereichs pulverförmiges Wärmeleitmaterial, insbesondere Al₂O₃ aufweisen. Mit anderen Worten kann in das Polymermaterial der Polymerhülle zumindest abschnittsweise im Bereich der Einkoppelfläche zusätzlich pulverförmiges Wärmeleitmaterial aufweisen, so dass die Wärmeleitfähigkeit im Bereich der Einkoppelfläche erhöht werden kann. Vorzugsweise handelt es sich bei dem pulverförmigen Wärmeleitmaterial um Al₂O₃.

Sofern das Wärmeleitelement mindestens teilweise pulverförmig ausgebildet ist, ist es möglich, dass das Wärmeleitelement nicht vollständig in einer losen Pulverform vorliegt. Vielmehr ist es möglich, dass das Wärmeleitelement ein Polymer-Pulver-Komposit ist. Dabei werden beide Vorteile der verwendeten Formen von Wärmeleitelementen, nämlich die Pulverform sowie die Ausbildung eines Formkörpers, miteinander vereint.

In einer Ausführungsform der Erfindung ist es möglich, dass die Polymerhülle, insbesondere im Bereich der Einkoppelfläche, eine Dicke von höchstens 0,5 mm, insbesondere von höchstens 0,3 mm, insbesondere von höchstens 0,02 mm, besonders bevorzugt von höchstens 0,01 mm, aufweist.

In einer Ausführung ist es möglich, dass das eine oder die mehreren Wärmeleitelemente nicht vollumfänglich im ersten oder zweiten Wärmeleitbereich verbaut sind, sondern auch in den jeweils anderen Bereich eingreifen. Es ist auch möglich, dass in beiden Wärmeleitbereichen Wärmeleitelemente aus unterschiedlichen Materialen und/oder Formen eingebracht sind. Diese Wärmeleitelemente können durch zusätzlich in die Polymerhülle eingebrachte Materialien ausgebildet sein, sie können aber auch Funktionsschichten des Sensor-Trägerelementes umfassen, wie z.B. Passivierungsschichten und Isolationsschichten aus Glas um ein PTC-Element oder dielektrische Schichten um ein NTC-Sensorelement.

In dem Fall lenken und befördern alle Wärmeleitelemente den Wärmestrom. Die Wirkung der Elemente aus dem ersten Wärmeleitbereich reduziert die gewünschte Wirkung der Elemente aus dem zweiten Wärmeleitbereich. Für die praktische Anwendung wesentlich ist dann die Nettoeigenschaft der Sensorbaugruppe.

Selbst eine erfindungsgemäße Baugruppe wird bei Montage in falscher Orientierung an ein zu messendes Objekt seine positiven Eigenschaften in Bezug auf die Messgenauigkeit und Messgeschwindigkeit nicht entfalten, wenn es in der falschen Orientierung, also mit dem ersten Wärmeleitbereich angrenzend an das Messobjekt verbaut wird.

Aufgrund der erfindungsgemäßen Ausbildung der Sensorbaugruppe, die hinsichtlich der Wärmeleitbereiche erfindungsgemäße weitergebildet ist, ist es möglich, eine Polymerhülle zu verwenden, die insbesondere im Bereich der Einkoppelfläche hinsichtlich der Dicke reduziert ist. Polymerhüllen sind relativ schlechte Wärmeleiter, so dass vorteilhaft auf die Verwendung dieser Polymermaterialien im Bereich der Hülle bestmöglich verzichtet werden kann, indem die Materialdicken entsprechend reduziert werden.

In einer Ausführungsform der Erfindung ist es möglich, dass der Wärmewiderstand des ersten Wärmeleitbereichs mindestens 20 %, insbesondere mindestens 30 %, besonders bevorzugt mindestens 50 %, größer ist als der Wärmewiderstand des zweiten Wärmeleitbereichs. Hinsichtlich dieser Werte, die durch entsprechende Materialkombination bzw. durch Ausbilden von mindestens einem Wärmeleitelement ermöglicht werden, wird eine derartige Sensorbaugruppe zur Verfügung gestellt, die hinsichtlich der Ansprechzeit des Sensor-Elements besonders vorteilhaft weiterentwickelt ist.

In einer Ausführungsform ist es möglich, dass das mindestens eine Wärmeleitelement im zweiten Wärmeleitbereich ein Volumen unter 10 mm³, bevorzugt unter 5 mm³, besonders bevorzugt zwischen 2 und 3 mm³ umfasst.

In einer Ausführungsform ist es möglich, dass das Sensor-Element in der Sensorbaugruppe einen positiven oder einen negativen Temperaturkoeffizenten ausweist. In einer Ausführungsform ist es möglich, dass in der Sensorbaugruppe ein Sensor- Element mit einem positiven Temperaturkoeffizienten aufweist, und die Sensorbaugruppe innerhalb mindestens der Toleranzklasse F 0.6 (2B) oder der Toleranzklasse F 0.3 (B) nach DIN EN 60751:2009-05 liegt, sofern der Anwendungsbereich auf 0°C -200°C eingeschränkt wird.

Ein weiterer Aspekt der Erfindung betrifft eine Anordnung, umfassend eine erfindungsgemäße Sensorbaugruppe und ein zu messendes Objekt, wobei der zweite Wärmeleitbereich dem zu messenden Objekt zugewandt ausgebildet ist und die zu dem zweiten Wärmeleitbereich zugehörige Einkoppelfläche die an dem zu messenden Objekt anliegende Anlagefläche der Sensorbaugruppe bildet oder aufweist.

In Zusammenhang mit der erfindungsgemäßen Anordnung ergeben sich gleiche oder gleichlautende Vorteile, wie diese bereits im Zusammenhang mit der Sensorbaugruppe angegeben sind.

Hinsichtlich der Sensorbaugruppe, die im Zusammenhang mit der erfindungsgemäßen Anordnung verwendet wird bzw. ausgebildet ist, wird auf vorherige Erläuterungen verwiesen.

In einer bevorzugten Ausführungsform der Erfindung handelt es sich bei dem zu messenden Objekt um einen stromführenden Leiter, insbesondere eine Motorenwicklung.

In einer Ausführungsform betreffend die erfindungsgemäße Anordnung besteht zwischen der Einkoppelfläche und der gegenüberliegender Außenfläche ein Temperaturgradient größer als 1,5 K, insbesondere größer als 1,0 K, besonders bevorzugt größer 0, 5 K.

Bei dem stromführenden Leiter kann es sich beispielsweise auch um eine Bus-Bar oder um eine Stromzuleitung an einer Batterie oder an Teilen einer Batterie (z.B. Batteriezellen) handeln.

Bei dem zu messenden Objekt kann es sich auch um einen Hair-Pin oder einen Flachdraht handeln. Das zu messende Objekt kann Teil einer Spule und/oder einer Wicklung, z.B. einer Motorenwicklung, sein.

Die erfindungsgemäße Sensorbaugruppe ist für die schnelle Detektion von Temperaturanstiegen an der Einkoppelfläche besser geeignet als die ähnliche Sensorbaugruppe unter Weglassen des Wärmeleitelementes. Insbesondere ist die Sensorbaugruppe besonders geeignet im Falle eines Anstiegs des Temperaturgradienten zwischen der Einkoppelfläche und der gegenüberliegenden Fläche der Sensorbaugruppe. Die Optimierung der erfindungsgemäßen Sensorbaugruppe ist für den Fall der Abnahme des Temperaturgradienten zwischen den oben genannten Seiten nicht notwendig gewährleistet.

Somit kann die Sensorbaugruppe in geeigneter Verbindung mit einer Steuerungseinheit zur Abschaltung oder zur Leistungsreduktion von elektrischen Verbrauchern oder Wärmequellen genutzt werden. Bevorzugt kann durch den Anstieg des gemessenen Signals am Sensor-Element ein Abschaltvorgang oder eine Leistungsreduktion an einem stromdurchflossenen Leiter ausgelöst werden.

Das zu messende Objekt kann mindestens eine planare Oberfläche aufweisen und die Einkoppelfläche kann an der planaren Seite des zu messenden Objektes anliegen. Das Wärmeleitelement kann ebenfalls mindestens eine planare Oberfläche aufweisen. In einer Ausführung kann die mindestens eine planare Oberfläche des Wärmeleitelementes im Wesentlichen parallel zur Einkoppelfläche liegen.

In einer weiteren Ausführungsform der Erfindung kann eine dem Sensor-Element zugewandte Seite des Wärmeleitelementes nicht planar oder nicht einteilig ausgebildet sein.

Die Anordnung kann des Weiteren ein Halteelement aufweisen, das eine Befestigung der Sensorbaugruppe am zu messenden Objekt ermöglicht. Bei der Haltevorrichtung kann es sich beispielsweise um eine Klammer handeln. Des Weiteren ist es möglich, dass in der Sensorbaugruppe beispielsweise eine Öffnung ausgebildet ist, so dass in diese Öffnung ein Befestigungselement eingeführt werden kann und das derart in die Sensorbaugruppe eingeführte Befestigungselement eine Verbindung zum zu messenden Objekt herstellen kann. In der Ausführung eines aus der Polymerhülle herausragenden Wärmeleitelementes kann ein Halteelement alternativ oder zusätzlich auch in dieses Wärmeleitelement eingearbeitet sein.

Alle Merkmale einer Ausführungsform können mit Merkmalen einer anderen Ausführungsform kombiniert werden, wenn die Merkmale der verschiedenen Ausführungsformen vereinbar sind.

Die in der Beschreibung der vorliegenden Offenbarung verwendete Terminologie dient nur der Beschreibung bestimmter Ausführungsformen und ist nicht als Einschränkung des Gegenstands zu verstehen. Wie in der vorliegenden Beschreibung und den Ansprüchen verwendet, sind die Singularformen "ein", "eine" und "die" so zu verstehen, dass diese auch die Pluralformen einschließen, sofern der Kontext nicht eindeutig etwas Anderes vorgibt. Dies gilt auch umgekehrt, d.h. die Pluralformen schließen auch die Singularformen ein. Es versteht sich auch, dass der Begriff "und/oder", wie er hier verwendet wird, sich auf alle möglichen Kombinationen von einem oder mehreren der zugehörigen aufgelisteten Elemente bezieht und diese einschließt. Es versteht sich weiterhin, dass die Begriffe "beinhaltet", "einschließlich", "umfasst" und/oder "umfassend", wenn sie in der vorliegenden Beschreibung und den Ansprüchen verwendet werden, das Vorhandensein der angegebenen Merkmale, Schritte, Operationen, Elemente und/oder Komponenten spezifizieren, aber nicht das Vorhandensein oder Hinzufügen eines oder mehrerer anderer Merkmale, Schritte, Operationen, Elemente, Komponenten und/oder Gruppen davon ausschließen.

Vorteile und Zweckmäßigkeiten der Erfindung ergeben sich im Übrigen aus den abhängigen Ansprüchen und der nachfolgenden Beschreibung von Ausführungsbeispielen anhand der Figuren. Von diesen zeigen:
- Fig. 1: eine Schnittdarstellung hinsichtlich einer möglichen Ausführungsform einer erfindungsgemäßen Sensorbaugruppe;
- Fig. 2a u. 2b: unterschiedliche Schnittdarstellungen hinsichtlich einer weiteren Ausführungsform der erfindungsgemäßen Sensorbaugruppe;
- Fig. 3 - 5: jeweils Schnittdarstellungen von unterschiedlichen Ausführungsformen der erfindungsgemäßen Sensorbaugruppe bzw. Anordnung;
- Fig. 6a u. 6b: Schnittdarstellungen hinsichtlich der Anordnung des Sensor-Elements innerhalb der Polymerhülle gemäß alternativen Ausführungsformen der erfindungsgemäßen Sensorbaugruppe;
- Fig. 7: Darstellung hinsichtlich einer alternativen Anordnung eines Wärmeleitelements einer möglichen Ausführungsform einer erfindungsgemäßen Sensorbaugruppe;
- Fig. 8 u. 9: weitere Schnittdarstellungen hinsichtlich der Ausbildung der Polymerhüllen von weiteren möglichen Ausführungsformen einer erfindungsgemäßen Sensorbaugruppe;
- Fig. 10 u. 11: weitere Schnittdarstellungen hinsichtlich der Ausbildung der Polymerhüllen von weiteren möglichen Ausführungsformen einer erfindungsgemäßen Sensorbaugruppe mit mehreren Wärmeleitelementen; und

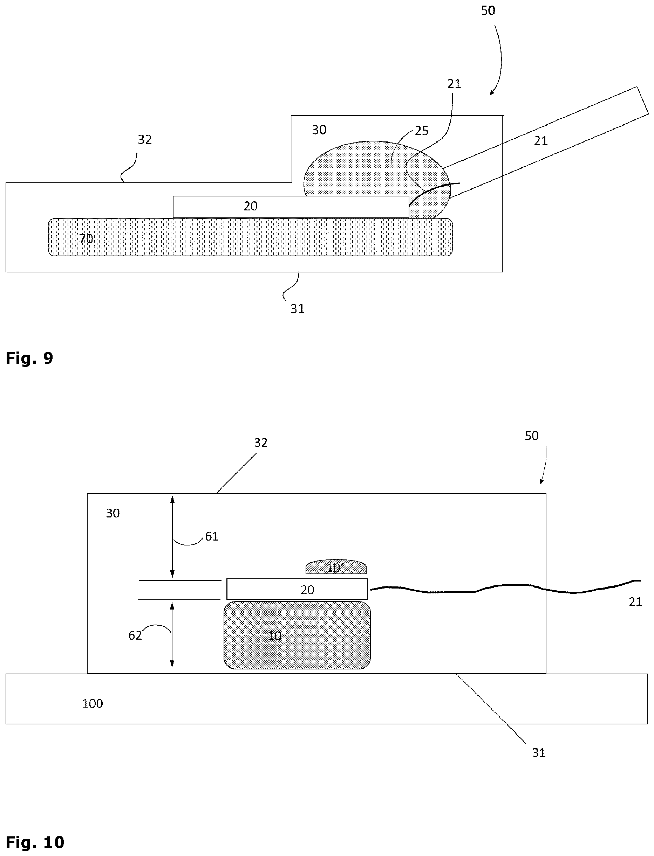

- Fig. 10 u. 12: weitere Schnittdarstellungen hinsichtlich der Ausbildung der Polymerhüllen von weiteren möglichen Ausführungsformen einer erfindungsgemäßen Sensorbaugruppe mit mehreren Wärmeleitelementen.

Die Erfindung wird nachfolgend anhand von nichtbeschränkenden Beispielen näher erläutert.

Im Folgenden werden für gleiche und gleichwirkende Bauteile die gleichen Bezugsziffern verwendet.

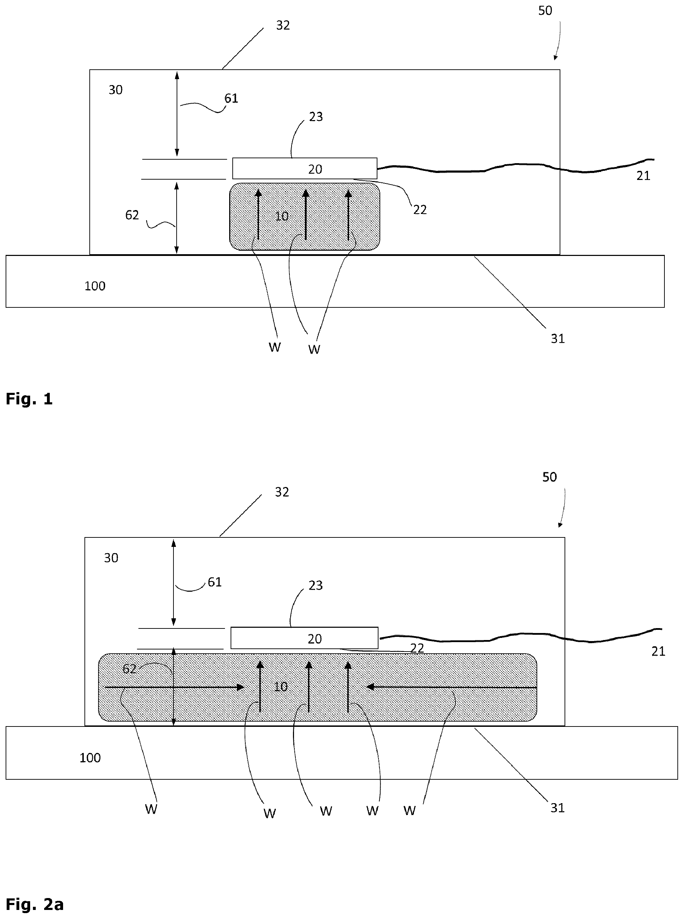

In Fig. 1 wird eine erste Ausführungsform einer erfindungsgemäßen Sensorbaugruppe 50 dargestellt. Die Sensorbaugruppe 50 weist ein Sensor-Element 20, das im vorliegenden Fall vollständig in einer Polymerhülle 30 angeordnet ist. Die Polymerhülle 30 weist eine Einkoppelfläche 31 auf, die zum Inkontaktbringen mit einem zu messenden Objekt 100 eine zur Einkoppelfläche 31 gegenüberliegende Außenfläche 32 aufweist.

Als Einkoppelfläche 31 ist die Seite der Polymerhülle 30 zu verstehen, die vollständig in Kontakt mit dem zu messenden Objekt 100 ist. Dies muss nicht die im vorliegenden Fall vollständige Unterseite der Polymerhülle 30 sein. Es ist auch möglich, dass die Unterseite teilweise an den Seitenkanten nach oben gebogen ist, so dass die Einkoppelfläche 31 kleiner als die vollständige Unterseite bzw. die nach unten weisende Seite der Polymerhülle 30 sein kann.

Das Sensor-Element 20 weist wiederum eine zur Einkoppelfläche 31 weisende Unterseite 22 und eine zur Außenfläche 32 weisende Oberseite 23 auf. Die Außenfläche 32 der Polymerhülle 30 ist zur Einkoppelfläche 31 gegenüberliegend ausgebildet. Mit anderen Worten kann als Außenfläche 32 auch eine der größeren Grundflächen der Polymerhülle 30 bezeichnet werden, die nicht in Kontakt mit einem zu messenden Objekt 100 ist bzw. nicht mit einem zu messenden Objekt 100 in Kontakt gebracht werden soll.

Als Außenfläche 32 ist beispielsweise wie in Fig. 1 dargestellt, eine zur Einkoppelfläche 31 parallele Fläche zu verstehen. Die Definition der Einkoppelfläche 31 sowie der Außenfläche 32 dient insbesondere zur Definition der Wärmeleitbereiche 61 und 62.

Zwischen der Oberseite 23 des Sensor-Elements 20 und der Außenfläche 32 der Polymerhülle 30 ist ein erster Wärmeleitbereich 61 ausgebildet. Zwischen der Unterseite 22 des Sensor-Elements 20 und der Einkoppelfläche 31 ist mindestens ein zweiter Wärmeleitbereich 62 ausgebildet. Erfindungsgemäß ist der Wärmewiderstand des ersten Wärmeleitbereichs 61 mindestens 10 % größer als der Wärmewiderstand des zweiten Wärmeleitbereichs 62.

In der Ausführungsform gemäß Fig. 1 ist im zweiten Wärmeleitbereich 62 ein Wärmeleitelement 10 ausgebildet. Hierbei handelt es sich um einen Formkörper, der vorzugsweise aus einem Keramik-Material gebildet ist.

Aufgrund der Ausbildung der erfindungsgemäßen Sensorbaugruppe 50 und durch Anlage der Sensorbaugruppe 50 am zu messenden Objekt 100 auf der Einkoppelfläche 31, kann der Wärmestrom, der vom zu messenden Objekt 100 ausgeht, äußerst effektiv in Richtung des Sensor-Elements 20 geleitet werden. Hierzu ist im Wärmeleitelement 10 mittels Pfeilen der Wärmestrom W dargestellt. Dieser verläuft vom zu messenden Objekt 100 im Wesentlichen senkrecht zur Einkoppelfläche 31.

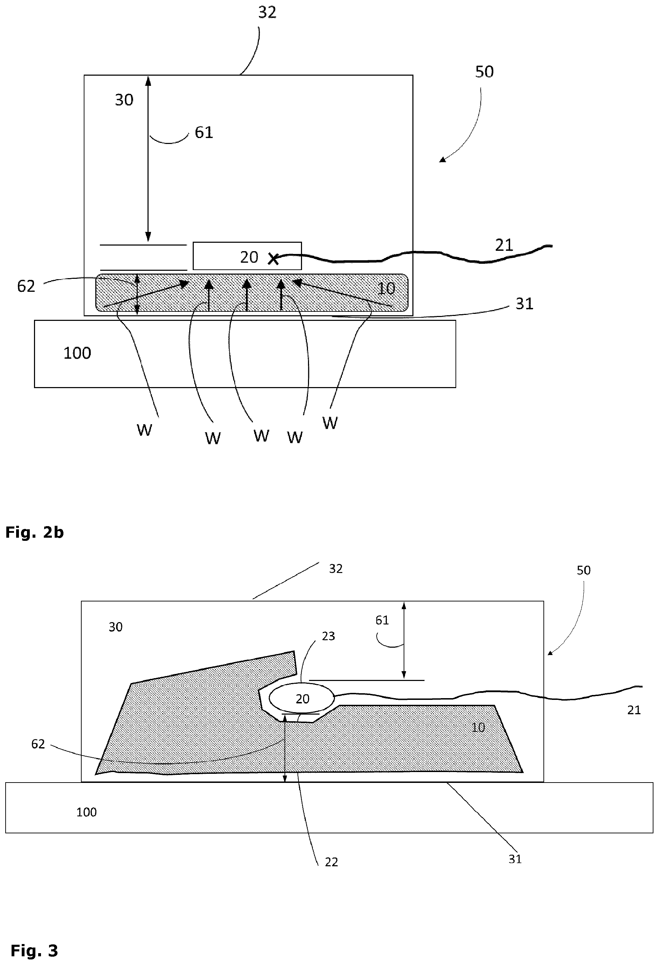

In der Ausführungsform gemäß Fig. 2a und 2b wird eine Sensorbaugruppe 50 mit im Wesentlichen gleichem Aufbau wie im Vergleich zu Fig. 1 dargestellt. Ein Unterschied kann hinsichtlich des Wärmeleitelements 10 erkannt werden. In Fig. 1 weist das Wärmeleitelement 10 Grundflächen auf, die im Wesentlichen der Oberseite/Unterseite 22/23 des Sensorelements 20 entsprechen.

Wie in den Schnittdarstellungen der Fig. 2a und 2b dargestellt, wobei Fig. 2a einen Längsschnitt und Fig. 2b einen Querschnitt darstellt, ist zu erkennen, dass das Wärmeleitelement 10 größere Grundflächen aufweist als die Unterseite/ Oberseite 22/23 des Sensor-Elements.

Fig. 2b zeigt konkret einen Querschnitt mit Blickrichtung in den Anschlussbereich der Zuleitung 21 zum Sensor-Element. Mithilfe des derart gegenüber dem Sensor-Element 20 vergrößerten Wärmeleitelements 10 kann der Wärmestrom W entsprechend beeinflusst werden. Ausgehend vom zu messenden Objekt 100 verläuft ein überwiegender Teil eines effektiven Wärmestroms vom zu messenden Objekt 100 in Richtung des Sensor-Elements 20 im Wärmeleitelement 10 senkrecht zur Einkoppelfläche 31.

Zusätzlich erfolgt eine Weiterleitung des Wärmestroms innerhalb des Wärmeleitelements 10 parallel zur Einkoppelfläche 31. Dies betrifft insbesondere die Bereiche des Wärmeleitelements 10, die eine Art Überstand zum Sensor-Element 20 bilden. Aufgrund der vergrößerten Ausbildung des Wärmeleitelements 10 ist es möglich, insbesondere bei zu messenden Objekten 100 mit schlechter Wärmeleitfähigkeit, eine schnelle und ausreichend große Weiterleitung des Wärmestroms W in Richtung des Sensor-Elements 20 zu gewährleisten.

In Fig. 3 ist eine weitere Ausführungsform einer erfindungsgemäßen Sensorbaugruppe 50 dargestellt. Bei dem dort dargestellten Sensor-Element 20 handelt es sich um ein NTC-Widerstandsensorelement, einen Heißleiter, das in der Regel in tropfenähnlicher Form eingesetzt wird. Dieses Sensorelement wird zusätzlich zu seiner üblicherweise homogenen Primärisolation durch Glasschichten (nicht dargestellt) in großen Teilen vom Wärmeleitelement 10 umschlossen. Auch bei Ausbildung eines Sensor-Elements 20 ist eine Art Unterseite 22 sowie eine Oberseite 22 auszumachen. Bei diesen Seiten handelt es sich um die zum zu messenden Objekt 100 weisende Seite 22 bzw. um die zur Außenfläche 32 weisende Seite 23. Das Wärmeleitelement 10 umgreift das Sensor-Element 20 vollständig an der Unterseite 22 sowie abschnittsweise in den seitlichen Bereichen sowie teilweise auf der Oberseite 23. Aufgrund dieses Umgreifens kann eine Führung des Wärmestroms W erzielt werden, wie dieser in Fig. 3 dargestellt ist. Das heißt, dass ein überwiegender Teil des effektiven Wärmestroms W senkrecht zur Einkoppelfläche 31 verläuft. Des Weiteren verläuft ein Teil des Wärmestroms W schräg direkt in Richtung des Sensorelements 20.

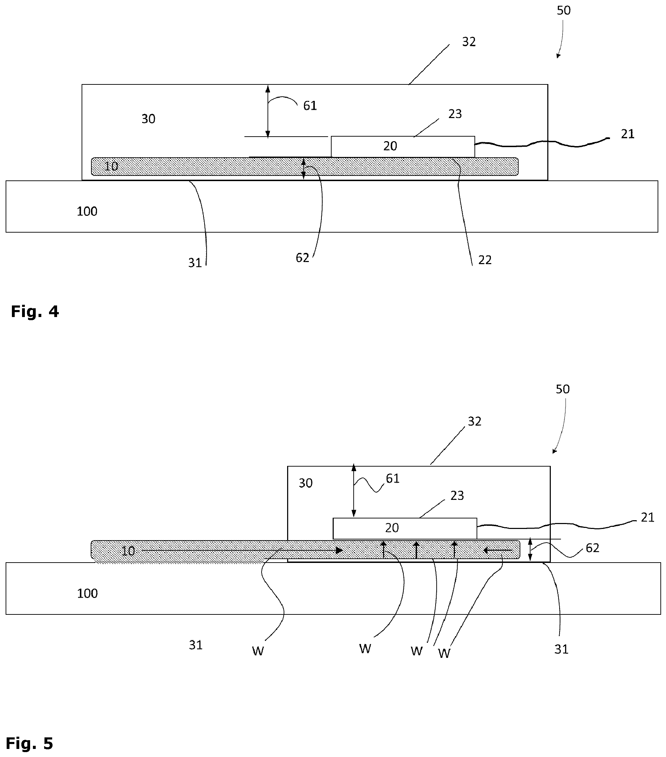

In Fig. 4 wird wiederum eine Ausführungsform der Sensorbaugruppe 50 gezeigt, die ein vergleichbar großes Wärmeleitelement 10 aufweist. Derart groß ausgebildete Wärmeleitelemente 10 dienen insbesondere zur Messung von zu messenden Objekten 100 mit schlechter Wärmeleitfähigkeit. Wie in Fig. 4 im Vergleich zu der Ausführungsform gemäß Fig. 2a, 2b dargestellt ist, muss das Wärmeleitelement 10 nicht zwangsläufig symmetrisch innerhalb der Sensorbaugruppe 50 und/oder symmetrisch zum Sensor-Element 20 ausgebildet sein. Im wie in Fig. 4 dargestellten Fall weist das Wärmeleitelement 10 eine mindestens zweifache Größe der Grundflächen im Vergleich zu der Unterseite/ Oberseite 22/23 des Sensor-Elements 20 auf.

Wie in Fig. 5 dargestellt ist, muss das Wärmeleitelement nicht vollständig von der Polymerhülle 30 umgeben sein. Auch in diesem Fall weist das Wärmeleitelement 10 eine Grundfläche auf, die mindestens 2,5-mal so groß wie die Unterseite/ Oberseite 22/23 des Sensor-Elements 20 ist. Über die Hälfte des Wärmeleitelements 10 ragt aus der Polymerhülle 30 hinaus.

Das Wärmeleitelement 10 ist in diesem Fall aus einem Metallblech gebildet und leitet den Wärmestrom vom zu messenden Objekt 100 in Richtung des Sensor-Elements 20. Wie die eingezeichneten Wärmeströme W zeigen, verläuft hierbei ein überwiegender Teil des effektiven Wärmestroms W im Wesentlichen parallel zur Einkoppelfläche 31. Der Wärmestrom wird mit anderen Worten vom zu messenden Objekt 10 in die Polymerhülle 30 in Richtung des Sensor-Elements 20 geleitet. In den Bereichen, in denen die Einkoppelfläche 31 direkt am zu messenden Objekt 100 anliegt, verläuft der effektive Wärmestrom W vom zu messenden Objekt 100 in Richtung des Sensor-Elements 20 im Wärmeleitelement 10 senkrecht zur Einkoppelfläche 31.

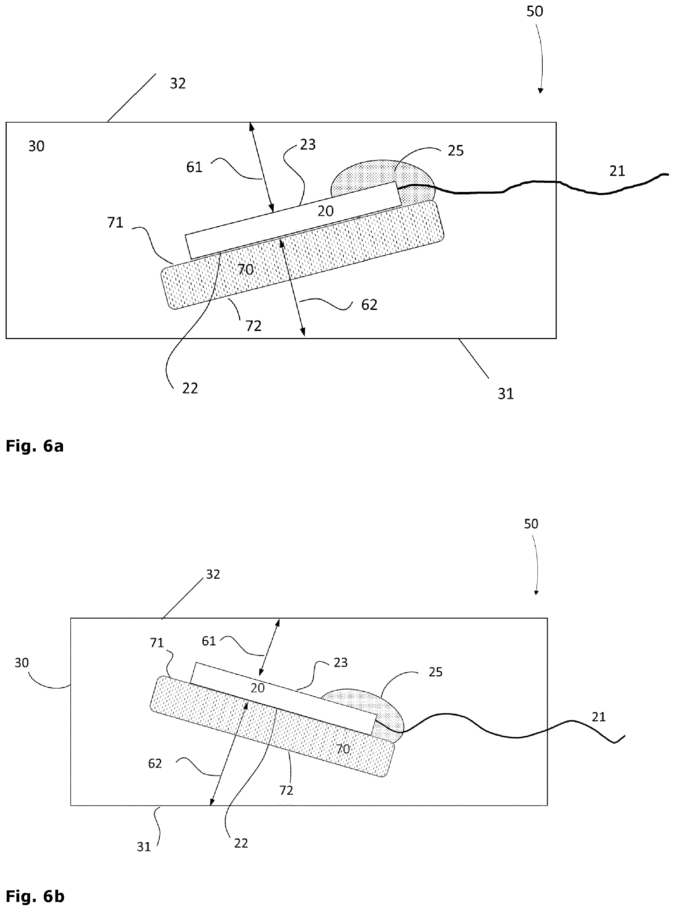

Wie in den folgenden Fig. 6a und 6b dargestellt wird, ist es möglich, dass die Sensorbaugruppe 50 hinsichtlich der Einkoppelfläche 31 (das zu messende Objekt 100 ist im vorliegenden Fall nicht dargestellt) nicht zwangsläufig parallel angeordnet sein muss. Wie die Ausführungsformen gemäß Fig. 6a und 6b darstellen, weist die jeweils dargestellte Sensorbaugruppe 50 jeweils einen Träger 70 auf, der im vorliegenden Fall jeweils als Wärmeleitelement dient.

Das Sensor-Element 20 ist mit der Unterseite 22 jeweils mit einer ersten Grundfläche 71 des Trägers 70 verbunden, wobei der Träger neben der ersten Grundfläche 71 eine zweite Grundfläche 72 aufweist. Die zweite Grundfläche 72 ist in den Ausführungsformen gemäß Fig. 6a und 6b jeweils zur Einkoppelfläche 31 hin ausgerichtet. Ebenfalls zu erkennen ist die Zuleitung 21, die im vorliegenden Fall mithilfe eines Fixiertropfens 25 am Sensor-Element 20 befestigt ist.

Für den Aufbau einer Sensorbaugruppe 50, wie dieser in den Fig. 6a und 6b dargestellt ist, ergibt sich die gleiche Ausbildung von Wärmeleitbereichen 61 und 62. Zwischen der Oberseite 23 des Sensor-Elements 20 und der Außenfläche 32 der Polymerhülle 30 ist ein erster Wärmeleitbereich 61 ausgebildet. Zwischen der Unterseite 22 des Sensor-Elements 20 und der Einkoppelfläche 31 ist mindestens ein zweiter Wärmeleitbereich 62 ausgebildet. Der Wärmewiderstand des ersten Wärmeleitbereichs 61 ist mindestens 10 % größer als der Wärmewiderstand des zweiten Wärmeleitbereichs 62. Dies gilt auch bei der in Fig. 6a und 6b dargestellten Form eines asymmetrisch polymerverkapselten Sensor-Elements 20.

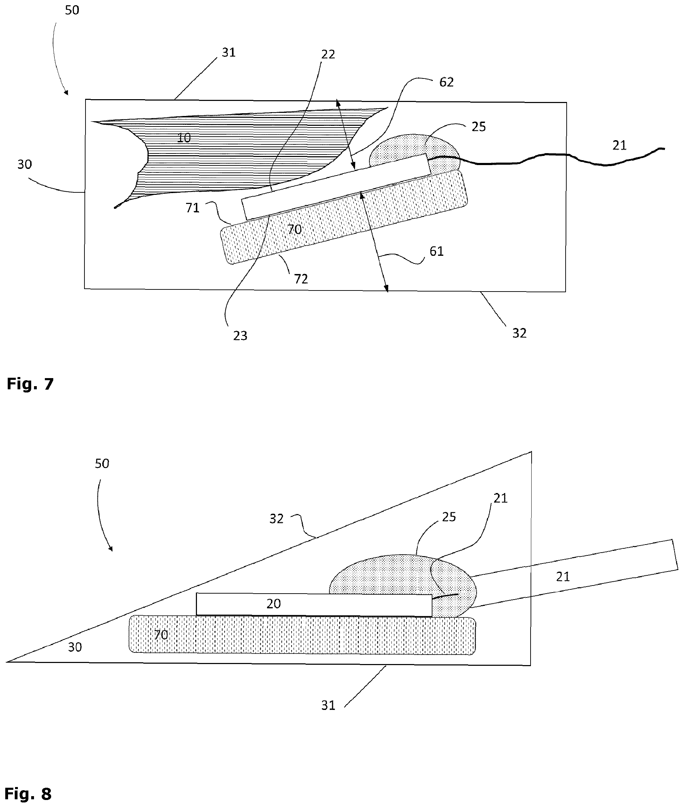

In Fig. 7 ist eine Ausführungsform einer Sensorbaugruppe 50 dargestellt, die ebenfalls auf einer asymmetrischen Polymerverkapselung eines Sensor-Elements 20 beruht. In diesem Fall weist das Sensor-Element einen Träger 70 auf. Die Einkoppelfläche 31 der Polymerhülle 30 ist im vorliegenden Fall zum Träger 70 gegenüberliegend ausgebildet. Somit wird klar, dass die Verwendung der Begrifflichkeiten Oberseite 23 und Unterseite 22 im Zusammenhang mit dem Sensor-Element 20 immer in Relation zur Einkoppelfläche 31 zu verstehen sind, so dass die Wärmeleitbereiche 61/62 entsprechend definiert werden können.

Das Sensor-Element 20 ist an der Oberseite 23 mit dem Träger 70, konkret mit der ersten Grundfläche 71 des Trägers 70 verbunden. Zwischen der Oberseite 23 des Sensor-Elements 20 und der Außenfläche 32 der Polymerhülle 30 ist ein erster Wärmeleitbereich 61 ausgebildet. Zwischen der Unterseite 22 des Sensor-Elements 20 und der Einkoppelfläche 31 ist wiederum ein zweiter Wärmeleitbereich 62 ausgebildet. Der Wärmewiderstand des ersten Wärmeleitbereichs 61 ist mindestens 10 % größer als der Wärmewiderstand des zweiten Wärmeleitbereichs 62. Im vorliegenden Fall ist ein Wärmeleitelement 10 im zweiten Wärmeleitbereich 62 ausgebildet. Der asymmetrische Wärmetransport wird durch das zusätzlich verbaute Wärmeleitelement 10 befördert. Im vorliegenden Fall kann das Wärmeleitelement 10 zum Beispiel aus Aluminiumnitrid bestehen.

In den Fig. 8 und 9 werden spezielle Ausführungsformen der Polymerhülle 30 dargestellt.

In Fig. 8 weist die Polymerhülle 30 im Längsschnitt eine Keilform auf. Trotz der ausgebildeten Keilform ist zu erkennen, dass die Außenfläche 32 gegenüberliegend zur Einkoppelfläche 31 ausgebildet ist. In diesem Fall ist die gegenüberliegende Ausbildung nicht im Sinne einer parallelen Ausbildung zu verstehen. Vielmehr ist die Außenfläche 32 als die Fläche der Polymerhülle 30 zu verstehen, zu welcher die Oberseite 23 des Sensorelements 20 weist. Unterstützt durch die keilförmige Außenform wird eine schnelle Leitung des Wärmestroms ausgehend vom zu messenden Objekt (nicht dargestellt) in Richtung des Sensor-Elements 20 ermöglicht.

In Fig. 9 ist eine Polymerhülle 30 mit Stufenform dargestellt. Im Bereich des Sensor-Elements 20 bzw. im Bereich des Sensor-Elements 20 des Wärmeleitelements 10 sowie des Fixiertropfes 25, ist die Polymerhülle 30 im Wesentlichen rechteckig ausgebildet.

Die Ausführungsform der Fig. 9 zeigt, dass in diesem Fall die Zuleitung 21 großflächig von der Polymerhülle 30 umgeben ist. Um das Sensor-Element 20, das Wärmeleitelement 10 sowie den Fixiertropfen 25 möglichst nahe an der Einkoppelfläche 31 sowie der Außenfläche 32 zu platzieren, ist in diesem Fall die Ausbildung der Polymerhülle 30 in einer Stufenform vorteilhaft, da einerseits die Zuleitung 21 durch die Ausbildung der Polymerhülle und dem zugehörigen Polymermaterial besonders geschützt ist und zum anderen eine schnelle Weiterleitung des Wärmestroms durch das Wärmeleitelement in Richtung des Sensor-Elements 20 ermöglicht wird.

Fig. 10 zeigt eine Sensorbaugruppe 50 mit mehreren Wärmeleitelementen 10, 10'. Die Wärmeleitelemente 10, 10' sind sowohl im ersten Wärmeleitbereich 61 als auch im zweiten Wärmeleitbereich 62 positioniert. Konkret ist ein erstes Wärmeleitelement 10 im zweiten Wärmeleitbereich 62 und ein zweites Wärmeleitelement 10' im ersten Wärmeleitbereich 61 ausgebildet.

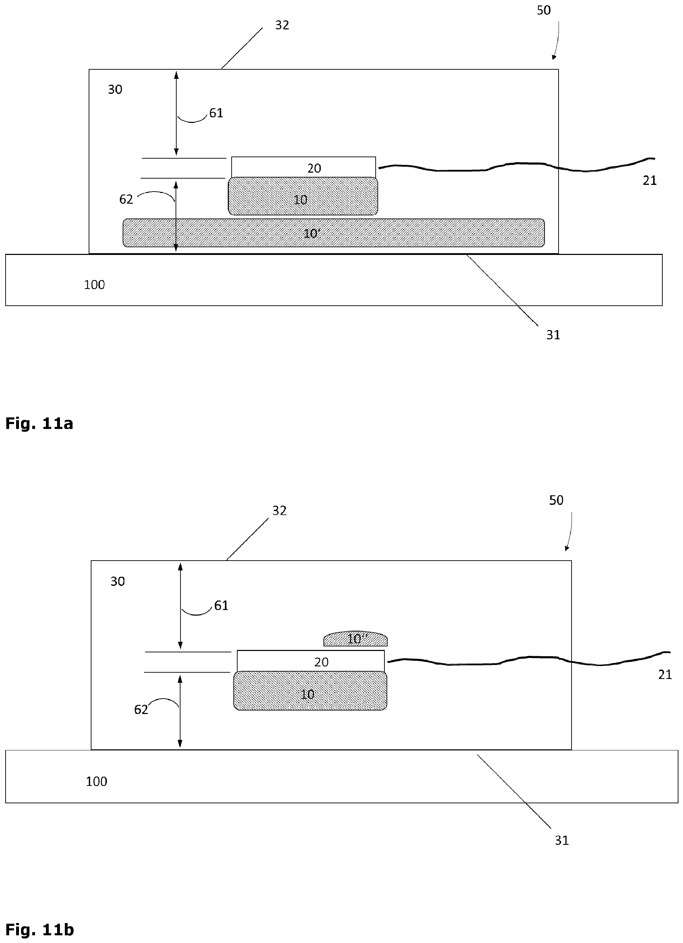

Fig. 11a und 11b zeigen jeweils eine Sensorbaugruppe 50 mit mehreren Wärmeleitelementen 10, 10' und 10". Figur 11 a zeigt ein Wärmeleitelement 10', das unterstützend zum Wärmeleitelement 10 in der Primärisolation eingebaut ist. Die Wärmeleitelemente 10, 10' sind im zweiten Wärmeleitbereich 62 positioniert. Figur 11b zeigt ein Wärmeleitelement 10", dessen Wirkung vom ersten Wärmeleitelement 10 der Primärisolation abgeschwächt wird.

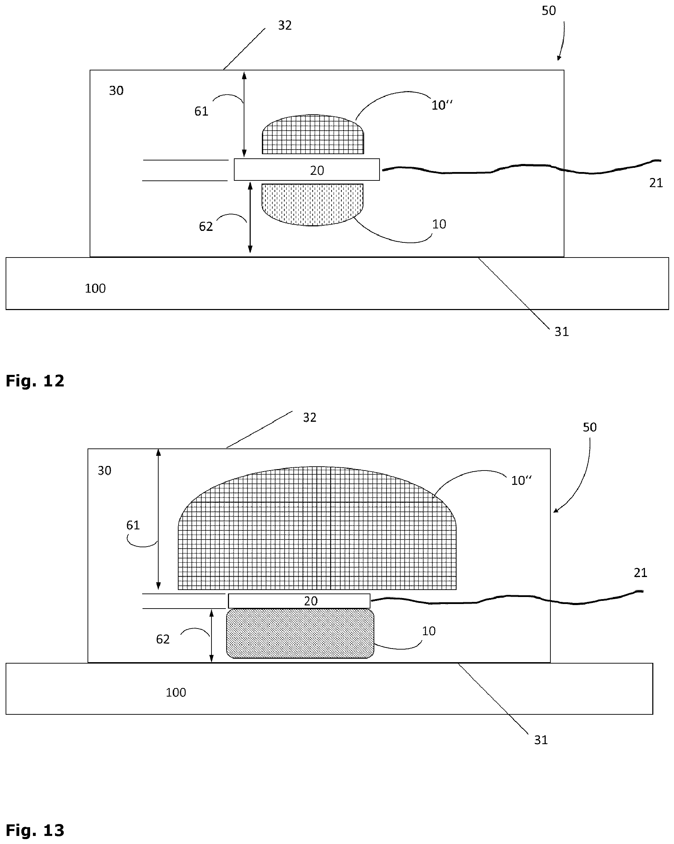

Fig. 12 zeigt eine Sensorbaugruppe 20 mit zwei Wärmeleitelementen 10, 10" gleicher Größe in den beiden Wärmeleitbereichen 61 und 62. Die Wärmeleitelemente 10, 10" weisen unterschiedlich gute Wärmeleitfähigkeiten auf. Auch diese Ausführung führt bei entsprechend hohen Unterschieden in den spezifischen Wärmeleitfähigkeiten der Wärmeleitelemente 10' und 10" zu einer erfindungsgemäßen Ausführungsform.

Fig. 13 zeigt eine Sensorbaugruppe 50 mit zwei Wärmeleitelementen 10, 10" unterschiedlicher Größe in den beiden Wärmeleitbereichen 61 und 62. Es ergeben sich unterschiedlich gute Wärmeleitfähigkeiten. Hier weist das Wärmeleitelement 10' eine deutlich höhere Wärmeleitfähigkeit als das Wärmeleitelement 10" auf. Trotz des Volumenunterschiedes der beiden Wärmeleitelemente 10, 10" ist der zweite Wärmeleitbereich 61 im Bereich von Wärmeleitelement 10' ausgebildet.

### Bezugszeichen

- 10, 10', 10": Wärmeleitelement
- 20: Sensor-Element
- 21: Zuleitung
- 22: Unterseite
- 23: Oberseite
- 25: Fixiertropfen
- 30: Polymerhülle
- 31: Einkoppelfläche
- 32: Außenfläche
- 50: Sensorbaugruppe
- 61: erster Wärmeleitbereich
- 62: zweiter Wärmeleitbereich
- 70: Träger
- 71: erste Grundfläche
- 72: zweite Grundfläche
- 100: zu messendes Objekt

- W: Wärmestrom

## Patentansprüche

1. Sensorbaugruppe (50) mit einem Sensor-Element (20) das zumindest abschnittsweise, vorzugsweise vollständig, in einer Polymerhülle (30) angeordnet ist,
wobei die Polymerhülle mindestens eine Einkoppelfläche (31) zum Inkontaktbringen mit einem zu messenden Objekt (100) und eine zur Einkoppelfläche (31) gegenüberliegende Außenfläche (32) aufweist, wobei das Sensor-Element (20) eine zur Einkoppelfläche (31) weisende Unterseite (22) und eine zur Außenfläche (32) weisende Oberseite (23) aufweist,
wobei zwischen der Oberseite (23) des Sensor-Elements (20) und der Außenfläche (32) ein erster Wärmeleitbereich (61) und zwischen der Unterseite (22) des Sensor-Elements (20) und der Einkoppelfläche (31) mindestens ein zweiter Wärmeleitbereich (62) ausgebildet ist, wobei der Wärmewiderstand des ersten Wärmeleitbereichs (61) mindestens 10 % größer ist als der Wärmewiderstand des zweiten Wärmeleitbereichs (62).

2. Sensorbaugruppe (50) nach Anspruch 1,
**gekennzeichnet durch**
mindestens ein Wärmeleitelement (10), das mindestens abschnittsweise in dem zweiten Wärmeleitbereich (62) ausgebildet ist.

3. Sensorbaugruppe (50) nach Anspruch 2,
**dadurch gekennzeichnet, dass**
der überwiegende Teil, vorzugsweise ein wesentlicher Teil, eines effektiven Wärmestroms (W) vom zu messenden Objekt (100) in Richtung des Sensor-Elements (20) im Wärmeleitelement (10) im Wesentlichen parallel und/oder senkrecht zur Einkoppelfläche (31) verläuft.

4. Sensorbaugruppe (50) nach Anspruch 2 oder 3,
**dadurch gekennzeichnet, dass**
mindestens ein Wärmeleitelement (10) zumindest abschnittsweise als Formkörper und/oder Blech, der/das Metall und/oder Keramik, insbesondere AIN und/oder SiC und/oder Si und/oder Cu, aufweist, gebildet ist.

5. Sensorbaugruppe (50) nach einem der Ansprüche 2 bis 4,
**dadurch gekennzeichnet, dass**
das Wärmeleitelement (10) zumindest abschnittsweise pulverförmig ausgebildet ist und vorzugsweise ein keramikhaltiges Komposit aufweist.

6. Sensorbaugruppe (50) nach einem der Ansprüche 1 bis 5,
**dadurch gekennzeichnet, dass**
das Sensor-Element (20) mit der Unterseite (22) oder Oberseite (23) mittel- oder unmittelbar mit einer ersten Grundfläche (71) eines Trägers (70) verbunden ist, wobei der Träger (70) die erste Grundfläche (71) und eine zweite Grundfläche (72) aufweist.

7. Sensorbaugruppe (50) nach Anspruch 6,
**dadurch gekennzeichnet, dass**
mindestens ein Wärmeleitelement (10) zumindest abschnittsweise vom Träger (70) gebildet ist.

8. Sensorbaugruppe (50) nach Anspruch 6 oder 7,
**dadurch gekennzeichnet, dass**
der Träger (70) Al2O3 und/oder AIN und/oder Si aufweist.

9. Sensorbaugruppe (50) nach einem der vorangegangenen Ansprüche,
**dadurch gekennzeichnet, dass**
die Polymerhülle (30) im Längsschnitt eine Keilform oder eine Stufenform aufweist.

10. Sensorbaugruppe (50) nach einem der vorangegangenen Ansprüche,
**dadurch gekennzeichnet, dass**
die Polymerhülle (30) mindestens abschnittsweise im Bereich der Einkoppelfläche (31) pulverförmiges Wärmeleitmaterial, insbesondere Al2O3, aufweist.

11. Sensorbaugruppe (50) nach einem der vorangegangenen Ansprüche,
**dadurch gekennzeichnet, dass**
die Polymerhülle (30), insbesondere im Bereich der Einkoppelfläche (31), eine Dicke von höchstens 0,5 mm, insbesondere von höchstens 0,3 mm, insbesondere von höchstens 0,02 mm, besonders bevorzugt von höchstens 0,01 mm, aufweist.

12. Sensorbaugruppe (50) nach einem der vorangegangenen Ansprüche,
**dadurch gekennzeichnet, dass**
wobei der Wärmewiderstand des ersten Wärmeleitbereichs (61) mindestens 20 %, insbesondere mindestens 30 %, besonders bevorzugt mindestens 50 %, größer ist als der Wärmewiderstand des zweiten Wärmeleitbereichs (62).

13. Anordnung, umfassend eine Sensorbaugruppe (50) nach einem der Ansprüche 1 bis 12 und ein zu messendes Objekt (100),
wobei der zweite Wärmeleitbereich (62) dem zu messenden Objekt (100) zugewandt ausgebildet ist und die zu dem zweiten Wärmeleitbereich (62) zugehörige Einkoppelfläche (31) die an dem zu messenden Objekt (100) anliegende Anlagefläche der Sensorbaugruppe (50) bildet oder aufweist.

14. Anordnung nach Anspruch 13,
**dadurch gekennzeichnet, dass** zwischen der Einkoppelfläche (31) und der gegenüberliegender Außenfläche (32) ein Temperaturgradient größer als 1,5 K, insbesondere größer als 1,0 K, besonders bevorzugt größer 0, 5 K, besteht.

15. Anordnung nach Anspruch 13 oder 14,
**dadurch gekennzeichnet, dass**
das zu messende Objekt (100) ein stromführender Leiter, insbesondere eine Motorenwicklung, ist.
